(19) **Europäisches Patentamt**
**European Patent Office**
**Office européen des brevets**

(11) **EP 3 838 845 A1**

(12) **EUROPEAN PATENT APPLICATION**

(43) Date of publication:
**23.06.2021 Bulletin 2021/25**

(51) Int Cl.:
**C01F 7/00** *(2006.01)*          **C01F 5/24** *(2006.01)*

(21) Application number: **19383171.6**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **FUNDACION TECNALIA RESEARCH & INNOVATION**
**48160 Derio (ES)**

(72) Inventors:
• **Erkizia Jauregi, Edurne**
**48160 Derio - Bizkaia (ES)**

• **Salvador Polo, Alejandro**
**48160 Derio - Bizkaia (ES)**
• **Sánchez Dolado, Jorge**
**20018 Donostia - San Sebastián (ES)**
• **Aymonier, Cyril**
**33608 PESSAC (FR)**

(74) Representative: **Balder IP Law, S.L.**
**Paseo de la Castellana 93**
**5ª planta**
**28046 Madrid (ES)**

(54) **METHOD FOR PREPARING AMORPHOUS HYDROTALCITE-LIKE LAYERED DOUBLE HYDROXIDES, COMPOUNDS AND USES THEREOF**

(57)    The present invention relates to a method for preparing amorphous hydrotalcite-like layered double hydroxides (LDHs) in a continuous-flow hydrothermal reactor. It is also related to amorphous hydrotalcite-like LDHs obtained according to the process of the invention, having general formula $[M_n^{2+}M^{3+}(OH)_{2+2n}](A_{0.5}^{2-}) \cdot xH_2O$, wherein $M^{2+}$ denotes a divalent metal cation which is selected from the group consisting of $Mg^{2+}$, $Zn^{2+}$ and $Cu^{2+}$; $M^{3+}$ denotes a trivalent metal cation which is selected from the group consisting of $Al^{3+}$, $Fe^{3+}$ and $Mn^{3+}$; $A^{2-}$ denotes a divalent anion which is sulphate anion $(SO_4^{2-})$ or a mixture of sulphate anion $(SO_4^{2-})$ and carbonate anion $(CO_3^{2-})$; n denotes an integer in the range of from 1 to 5; and x denotes a value in the range of from 0 to 10. The invention also relates to the use of these amorphous hydrotalcite-like LDHs as accelerators of alkali-activated cement (AAC) hydration reactions.

EP 3 838 845 A1

**Description**

**TECHNICAL FIELD OF THE INVENTION**

The present invention relates to a method for preparing amorphous hydrotalcite-like layered double hydroxides (LDHs) in a continuous-flow hydrothermal reactor. Also provided are amorphous hydrotalcite-like LDHs obtained according to the process of the invention, in particular, amorphous hydrotalcite-like LDHs having general formula

$$[M_n^{2+}M^{3+}(OH)_{2+2n}](A_{0.5}^{2-}) \cdot xH_2O,$$ wherein $M^{2+}$ denotes a divalent metal cation which is selected from the group consisting of $Mg^{2+}$, $Zn^{2+}$ and $Cu^{2+}$; $M^{3+}$ denotes a trivalent metal cation which is selected from the group consisting of $Al^{3+}$, $Fe^{3+}$ and $Mn^{3+}$; $A^{2-}$ denotes a divalent anion which is sulphate anion $(SO_4^{2-})$ or a mixture of sulphate anion $(SO_4^{2-})$ and carbonate anion $(CO_3^{2-})$; n denotes an integer in the range of from 1 to 5; and x denotes a value in the range of from 0 to 10.

The present invention further provides the use of these amorphous hydrotalcite-like LDHs as accelerators of alkali-activated cement (AAC) hydration reactions.

**BACKGROUND OF THE INVENTION**

Naturally-occurring hydrotalcite, $[Mg_6Al_2(OH)_{16}(CO_3)\cdot 4H_2O]$, and synthetic hydrotalcite-like compounds, also known as layered double hydroxides (LDHs), have been the subject of extensive research for many years due to their physical and chemical similarities to clay minerals and their possible applications in many fields.

Layered double hydroxide general structure is based on brucite $Mg(OH)_2$ structure, which is modified by isomorphous substitution of divalent cations. The term 'isomorphous substitution' refers to the replacement of one cation by another of similar ionic radius in a crystal lattice without disrupting or changing the crystal structure of the mineral. Such substitution may take place between cations of the same charge, in which case no net charge is developed, but may also occur between cations with different positive charges, in which case a net positive charge may be created. In particular, the replacement of $Mg^{2+}$ by $M^{3+}$ ions generate an excess of positive charge within the brucite inorganic layers, which has to be balanced by incorporating anions in the interlayer space such as $NO_3^-$, $Cl^-$ and $CO_3^{2-}$. Through the years, research has evidenced the flexibility of layered double hydroxides as regards the tailoring of their chemical and physical properties.

Layered double hydroxides are typically synthesized by co-precipitation methods, wherein two suitable metal cations are precipitated in the presence of intercalating charge-balancing anions, which are usually carbonate anions, and a base, at either varying or constant pH. Several alternative methods of co-precipitation are known in the art, which are based on different sequences of reagent addition: e.g. conventional titration based on the slow addition of a base aqueous solution to an aqueous solution containing $M^{2+}$ and $M^{3+}$ ions until a suitable pH for LDHs to precipitate is achieved (Del Arco et al. J. Pharm. Sci. 2004, 93(6), 1649-1658); co-precipitation at low supersaturation with constant pH, wherein both the aqueous solution of metal salts and the base solution are concurrently added to a water-containing medium to maintain a suitable pH value (Ping et al. Int. J. Pharm. 2011, 404, 250-256); and precipitation at high supersaturation, wherein the aqueous solution containing $M^{2+}$ and $M^{3+}$ ions is directly added to the NaOH solution (Lu et al. J. Phys. Chem. B 2006, 110, 16923-16929).

However, co-precipitation methods have a number of significant drawbacks. In particular, since long processing times are usually required, an irregular degree of nucleation and aging occurs due to the formation of nuclei and crystal growth at different points in time. As a result, the products are generally finite crystallites with broad particle size distribution, and a tendency towards agglomeration is usually observed. Furthermore, conventional co-precipitation methods may only be operated as discontinuous processes. Consequently, they are not particularly suitable for mass-scale production, and neither can they ensure homogeneous product quality.

In view of all these limitations, extensive efforts have been devoted in recent years to find more efficient alternatives for preparing hydrotalcite-like materials, in particular, enhanced methods which may be carried out in continuous mode.

O'Hare et al. (Nanoscale 2013, 5, 114-117) have developed a continuous-flow hydrothermal method for preparing LDH nanoplates. In particular, the base aqueous solution is pumped through a pre-heater, at a temperature selected from 75, 150, 250 or 400 °C, before flowing into an inner tube (down-flow) of the nozzle reactor, while the system pressure is maintained at 50 or 240 bar inside the nozzle. Simultaneously, the metal precursor aqueous solution mixture is pumped at ambient temperature into the reactor (up-flow), so that both solutions are meeting and mixing directly inside the reactor. As a result, highly-crystalline Ca-Al-CO$_3$ and Mg-Al-CO$_3$ layered double hydroxides are obtained. However, even though the disclosure of O'Hare *et al.* notes that temperature, pressure and even residence time may be tuned up to a certain extent, no hint is given about the necessary conditions for preparing amorphous LDHs.

Aymonier, Prevot et al. (Chem. Nano. Mat. 2017, 3(9), 614-619) have recently developed a different version of the continuous flow hydrothermal method developed by O'Hare *et al*. In particular, they have developed a continuous co-flow hydrothermal process for the synthesis of highly-crystalline CO$_3$- and NO$_3$-LDH type materials in a tubular reactor, which is based on the use of a double-duct system. Thus, the preheated aqueous base solution is injected into the tubular reactor through a first tube at a specific flow rate (Q$_{base}$). In parallel, the aqueous salt solution containing cationic salts is injected at a specific flow rate (Q$_{salt}$) into a second tube with a smaller diameter, which is arranged concentrically inside the first tube and is of shorter length than the first one. Both flow rates must be controlled to ensure that Q$_{salt}$ is half the flow rate of Q$_{base}$, in order to have 2 mol of OH$^-$ anions per cation mol. As a result of this set-up, the aqueous salt solution flows directly into the base solution as the latter enters the reactor. Particle formation and growth begins as soon as both solutions mix together within the reactor. The specific set-up, that is, the tube assignation to each specific solution, as well as the specific flow rates, are essential to achieve the desired highly crystalline layered double hydroxides. However, no hint is given in the document about how to possibly adapt the method to prepare amorphous materials.

In view of the state of the art, there exists the need to provide a method for efficiently preparing amorphous layered double hydroxides, which is also suitable for industrial-scale production.

As regards LDH applications, it is known that highly-crystalline layer double hydroxides are particularly suitable for many uses (e.g. nanolithography) due to their attractive properties arising from their structural and chemical properties. Besides, there is also a growing interest in the use of LDHs in a number of different technical fields such as sensing, pharmaceutics or batteries, among others.

The first applications of LDHs in the field of cement materials have also been recently developed, though this area mostly remains unexplored. In particular, calcinated layered double hydroxides have shown promising chloride-absorbing properties when incorporated in a cement matrix (Yoon et al. Materials Chemistry and Physics 2014, 145, 376-386). It has also been shown that carbonation resistance capacity of concrete is enhanced by incorporating LDHs, especially calcinated layered double hydroxides, due to the easy exchange and immobilization of carbonate ions (Duan et al. Construction and Building Materials 2013, 48, 601-609). It is noted, though, that these advances seem to be only focused on the use of calcinated LDHs, that is, layered double hydroxides which have been subject to a high temperature treatment so that their layered structure disappears, and also on Portland cement-based materials.

Regarding the latter, it must be highlighted that while Portland cement is the dominant class amongst cementing materials, there is a rising interest in developing new sustainable construction materials. In this context, a new class of cementing material known as alkali-activated cement (AAC) is slowly emerging as a potential candidate for replacing Portland cement. Alkali activation is the term applicable to the reaction of a solid aluminosilicate precursor under alkaline conditions, induced by an alkali activator, to produce a hardened binder. Examples of solid aluminosilicate precursors include, but are not limited to, coal fly ashes, calcined clays and blast furnace slags. Examples of alkali activator include, but are not limited to, sodium or potassium oxides or hydroxides.

Alkali-activated cements may be used in pre-casting as well as in ready-mix concreting (e.g. reinforced, plain, lightweight or foamed concretes), and alkali-activation is in many cases less expensive than using Portland cements. However, AAC-based technology is not mature yet, and requires further development in the area of scalability and rheology control. Besides, there is a rising need for developing new compounds to enhance hardening conditions of certain types of AAC, such as those based on fly ashes, which often require heat curing.

## SUMMARY OF THE INVENTION

In a first aspect, the present invention provides a method for preparing hydrotalcite-like layered double hydroxides, more specifically, amorphous hydrotalcite-like layered double hydroxides. This method advantageously does not require preheating the precursor and base solutions or suspensions prior to being injected into the continuous-flow hydrothermal reactor, thus leading to a reduction in energy consumption compared to other known processes in the art. Furthermore, it has been surprisingly found that by injecting the base solution or suspension through a tubular component with a diameter which is smaller than that of the tubular component used for injecting the precursor solution or suspension, specific turbulence conditions are created which advantageously lead to the production of hydrotalcite-like layered double hydroxides in amorphous form.

In a second aspect, the present invention provides amorphous hydrotalcite-like layered double hydroxides, which are obtained by the process according to the first aspect of the invention.

According to a third aspect of the invention, it is provided the use of the amorphous hydrotalcite-like layered double hydroxides, obtained according to the process of the first aspect of the invention, as accelerators in alkali-activated cement hydration reactions. It has been surprisingly found that when they were used in alkali-activated cement hydration reactions, hydration rate increased significantly. Furthermore, calorimetry results indicate that the alkali-activated cement with the amorphous hydrotalcite-like LDH obtained according to the process of the invention hardens faster than other AACs in which either no accelerators were used, or crystalline LDHs obtained by conventional precipitation methods or hydrotalcite were used.

**BRIEF DESCRIPTION OF THE DRAWINGS**

**FIG. 1** - Exemplary continuous hydrothermal co-flow reactor used in the process of the invention.

**FIG. 2 -** X-ray powder diffraction (XRPD) patterns of: an exemplary amorphous Mg-Al-SO$_4$ hydrotalcite-like LDH (indicated as LDH-1; **FIG. 2, upper image**) obtained according to the process of the invention (see Example 1); a comparative Mg-Al-SO$_4$ hydrotalcite-like LDH obtained according to the method of Aymonier, Prevot *et al.* (indicated as LDH-2; **FIG. 2, central image**); and a comparative image including both XRPD diffraction patterns superimposed (**FIG. 2**, **lower image).**

**FIG. 3** - Fourier-Transform Infrared (FT-IR) spectrum of an exemplary amorphous Mg-Al-SO$_4$ hydrotalcite-like LDH (LDH-1) obtained according to the process of the invention (see Example 1).

**FIG. 4–** HRTEM image (**FIG. 4, left image and right image**) and selected area electron diffraction (SAED) shown in the insert (**FIG. 4, right image**) of an exemplary amorphous Mg-Al-SO$_4$ hydrotalcite-like LDH (LDH-1) obtained according to the process of the invention (see Example 1).

**FIG. 5 -** X-ray powder diffraction (XRPD) pattern of a comparative Mg-Al-SO$_4$ hydrotalcite-like LDH (LDH-3) obtained via conventional co-precipitation method (see Comparative example).

**FIG. 6** - Fourier-Transform Infrared (FT-IR) spectrum of a comparative Mg-Al-SO$_4$ hydrotalcite-like LDH (LDH-3) obtained via conventional co-precipitation method (see Comparative example).

**FIG. 7** - HRTEM image (**FIG. 7, upper image and bottom images**) and selected area electron diffractions shown (SAED) as inserts (**FIG. 7, lower images**) of a comparative hydrotalcite-like LDH (LDH-3) obtained via conventional co-precipitation method (see Comparative example).

**FIG. 8** - Heat flow curve of alkali-activated cement (ACC) hydration with 5% by weight of different LDHs: LDH-1 (i.e. amorphous Mg-Al-SO$_4$ hydrotalcite-like LDH obtained according to the process of the invention), LDH-3 (i.e. Mg-Al-SO$_4$ synthesized by co-precipitation method) and LDH-HT (i.e. commercial hydrotalcite).

**FIG. 9** - Accumulated heat curve of alkali-activated cement (ACC) hydration with 5% by weight of different LDHs: LDH-1 (i.e. amorphous Mg-Al-SO$_4$ hydrotalcite-like LDH obtained according to the process of the invention), LDH-3 (i.e. Mg-Al-SO$_4$ hydrotalcite-like LDH synthesized by co-precipitation method) and LDH-HT (i.e. commercial hydrotalcite).

**DETAILED DESCRIPTION OF THE INVENTION**

According to a first aspect of the invention, it is provided a process for the continuous, coaxial-flow production of amorphous layered double hydroxides (also known as LDHs), in particular, amorphous hydrotalcite-like layered double hydroxides, which are suitable for industrial applications. The process according to this first aspect comprises the following steps:

- contacting a first liquid stream with a second liquid stream to form a mixed solution or suspension in a first tubular component which is in fluid communication with a continuous-flow hydrothermal reactor; and
- flowing the mixed solution or suspension through the continuous-flow hydrothermal reactor to form the amorphous hydrotalcite-like layered double hydroxide;

wherein
the first liquid stream is a precursor solution or suspension comprising a divalent metal cation source and a trivalent metal cation source, and the second liquid stream is a base solution or suspension comprising a hydroxide source and a charge-balancing divalent anionic source;

the first liquid stream flows through the first tubular component at a flow rate $Q_{salt}$, and the second liquid stream flows through a second tubular component at a flow rate $Q_{base}$ which is at least twice the flow rate $Q_{salt}$;

the first tubular component has an internal diameter $d_1$ and the second tubular component has an internal diameter $d_2$ which is smaller than $d_1$;

the second tubular component extends within and along at least a portion of the first tubular component, and the first tubular and the second tubular components are configured so that the tubular outlet of the second tubular component is in fluid communication with the first tubular component at the inlet of the continuous-flow hydrothermal reactor; and

the continuous-flow hydrothermal reactor is operated at an internal pressure in the range of from 10 to 20 MPa and an internal temperature in the range of from 125 to 200°C.

The expression concerning that the second tubular component extends within and along at least a portion of the first tubular component is to be understood by the skilled person as referring to the second tubular component being arranged concentrically within and along at least a portion of the first tubular component

In one embodiment, the precursor solution or suspension and/or the base solution or suspension preferably comprise(s) water and/or an organic solvent which is miscible with water. Preferably, the precursor solution or suspension and/or the base solution or suspension comprise(s) water. In an alternative embodiment, the precursor solution or suspension and/or the base solution or suspension preferably comprise(s) an organic solvent which is miscible with water. The organic solvent is preferably an alcohol, more preferably a C1-C4 alcohol, which is advantageously selected from the group consisting of methanol, ethanol, *n*-propanol, isopropanol, *n*-butanol, isobutanol, and *tert*-butanol.

In one embodiment, the divalent metal cation for use in the process of the invention is selected from the group consisting of $Mg^{2+}$, $Zn^{2+}$ and $Cu^{2+}$ and any mixture thereof. More preferably, the divalent metal cation is selected from the group consisting of $Mg^{2+}$ and $Zn^{2+}$ and any mixture thereof, and even more preferably, the divalent metal cation is $Mg^{2+}$. It will be apparent for the skilled person that two or more different divalent metal cations may be used in the process of the invention for preparing the amorphous double layered hydroxides.

The divalent metal cation source used in the process of the invention may be any source known to the skilled person. In particular, divalent metal cation sources include soluble salts of the divalent metal cation, preferably, any inorganic salt containing $Mg^{2+}$, $Zn^{2+}$ or $Cu^{2+}$ cations. More preferably, the divalent metal cation sources are inorganic salts selected from the group consisting of nitrates, chlorides, perchlorates and any mixture thereof. Still more preferably, the divalent metal cation source is a nitrate salt such as $Mg(NO_3)_2$, $Zn(NO_3)_2$ or $Cu(NO_3)_2$, and/or a chloride salt such as $MgCl_2$, $ZnCl_2$ or $CuCl_2$. Still even more preferably, the divalent metal cation source is a nitrate salt, such as $Mg(NO_3)_2$, $Zn(NO_3)_2$ or $Cu(NO_3)_2$.

By the expression "soluble salts", it is to be understood that the ion sources are salts which dissolve completely and thus form a clear solution at room temperature in the medium employed.

Further examples of suitable $Zn^{2+}$ sources which are soluble or partially insoluble include zinc hydroxycarbonate.

The trivalent metal cation for use in the process of the invention is selected from the group consisting of $Al^{3+}$, $Fe^{3+}$ and $Mn^{3+}$ and any mixture thereof. More preferably, the trivalent metal cation is selected from the group consisting of $Al^{3+}$ and $Fe^{3+}$ and any mixture thereof, and even more preferably, the trivalent metal cation is $Al^{3+}$.

According to a preferred embodiment, the divalent metal cation is $Mg^{2+}$ and the trivalent metal cation is $Al^{3+}$.

The trivalent metal cation source used in the process of the invention may be any source known to the skilled person. In particular, trivalent metal cation sources include soluble salts of the trivalent metal cation, preferably, any inorganic salt containing $Al^{3+}$, $Fe^{3+}$ or $Mn^{3+}$ cations. More preferably, the trivalent metal cation sources are inorganic salts selected from the group consisting of nitrates, chlorides, perchlorates and any mixture thereof. Still more preferably, the trivalent metal cation source is a nitrate salt such as $Al(NO_3)_3$, $Fe(NO_3)_3$ or $Mn(NO_3)_3$, and/or a chloride salt such as $AlCl_3$, $FeCl_3$ or $MnCl_3$. More preferably, the trivalent metal cation source is a nitrate salt, such as $Al(NO_3)_3$, $Fe(NO_3)_3$ or $Mn(NO_3)_3$.

According to a preferred embodiment, the divalent metal cation is $Mg^{2+}$ and the trivalent metal cation is $Al^{3+}$.

In a preferred embodiment of the first aspect of the invention, the molar ratio divalent metal cation/trivalent metal cation in the precursor solution or suspension is in the range of from 5.0 to 1.0, preferably in the range of from 2.0 to 1.0.

Concerning the base solution or suspension, the hydroxide source can be alkali- or alkaline-earth metal hydroxide(s) which is/are directly added to the solution or suspension to form the base solution or suspension. Preferably, the hydroxide source is an alkali- or akaline-earth metal hydroxide selected from the group consisting of LiOH, NaOH, KOH, CsOH, $Mg(OH)_2$, $Ca(OH)_2$ and any mixture thereof. More preferably, the hydroxide source is an alkali or alkaline-earth metal hydroxide selected from the group consisting of LiOH, NaOH, KOH, $Mg(OH)_2$ and any mixture thereof. Still more preferably, the hydroxide source is an alkali or alkaline-earth metal hydroxide selected from the group consisting of NaOH, KOH, $Mg(OH)_2$ and any mixture thereof.

In another embodiment, the hydroxide source may also be the trivalent metal cation source, *e.g.* $Al(OH)_3$, $Fe(OH)_3$ or $Mn(OH)_3$.

The charge-balancing divalent anions of the process according the first aspect of the invention comprise sulphate

anions $(SO_4^{2-})$. On the other hand, it has been found that as soon as a certain degree of exposure to air and/or moisture occurs, carbonate ions may be trapped in the structure of the amorphous hydrotalcite-like LDH. Therefore, according to another embodiment of the invention, the charge-balancing divalent anions of the process according the first aspect of the invention may comprise sulphate anions $(SO_4^{2-})$ and carbonate anions $(CO_3^{2-})$.

The charge-balancing divalent anionic sources are preferably alkali- or akaline-earth metal sulphates or carbonates, depending on whether the charge-balancing divalent anions comprise sulphate anions alone, or in combination with carbonate anions. Non-limiting examples of charge-balancing divalent anionic sources include $Li_2SO_4$, $Na_2SO_4$, $K_2SO_4$, $Cs_2SO_4$, $MgSO_4$, $CaSO_4$ and any mixture thereof, as sulphate anion sources, and $Li_2CO_3$, $Na_2CO_3$, $K_2CO_3$, $Cs_2CO_3$, $MgCO_3$, $CaCO_3$ and any mixture thereof, as carbonate anion sources.

The first liquid stream, which is the precursor solution or suspension containing the divalent metal cation source and the trivalent cation source, flows through the first tubular component at a flow rate $Q_{salt}$, wherein the first tubular component has an internal diameter $d_1$. The second liquid stream, which is the base solution or suspension comprising the hydroxide source and the charge-balancing divalent anionic source, flows through the second tubular component at a flow rate $Q_{base}$, wherein the second tubular component has an internal diameter $d_2$, which is smaller than diameter $d_1$ of the first tubular component. The flow rate of the second liquid stream ($Q_{base}$) is always controlled to be at least twice the flow rate of the first liquid stream ($Q_{salt}$) to ensure that at least 2 mol of hydroxide anion per cation mol are provided, so that a neutral multilayer structure can be achieved in the amorphous hydrotalcite-like LDH obtained.

In a preferred embodiment of the first aspect of the invention, the molar ratio divalent metal cation/charge-balancing divalent anion in the mixed solution or suspension is in the range of 1.0 to 2.0.

The mixed solution has a pH value which is preferably in the range of 12 to 14 but, still more preferably, the mixed solution has a pH around 13.

The term "around" when used in the context of the present invention preceding a number and referring to it, is to be understood as designating any value lying within the range defined by the number ±5%, more preferably a range defined by the number ±2%. For example, the expression "around 10" should be construed as "within the range of 9.5 to 10.5", preferably "within the range of 9.8 to 10.2".

Without wishing to be bound by theory, it is postulated that by injecting the second liquid stream through a tubular component with a diameter which is smaller than that of the tubular component used for injecting the first liquid stream, certain turbulence conditions are created which advantageously provide the technical effect of the invention, i.e. the preparation of hydrotalcite-like layered double hydroxides in amorphous form. Such conditions appear to disfavour LDH crystal growth, and promote the formation of amorphous structures.

Additionally, the method of the present invention advantageously does not require preheating the precursor and base solutions or suspensions prior to being injected into the continuous-flow hydrothermal reactor, thus leading to a reduction in energy consumption compared to other known processes in the art.

Since the first and second tubular components are in direct contact with the first and second liquid streams, respectively, and also with the mixed solution, they can be preferably made of carbon steel or stainless steel. It will be apparent to a person skilled in the art that the length of the first and/or second component(s) may also be easily adjusted depending on the continuous flow hydrothermal reactor set-up.

In a preferred embodiment, the continuous-flow hydrothermal reactor is operated at an internal pressure in the range of from 12 to 17 MPa. Pressure inside the reactor may be controlled, for example, with a back-pressure regulator downstream.

In another embodiment, the continuous-flow hydrothermal reactor is operated at an internal temperature in the range of from 125 to 175°C. The heating of the reactor may be carried out, for example, with a silicone oil bath, which may be magnetically stirred to ensure the homogeneity of the temperature, or with an oven in which the reactor is encased. Preferably, the heating of the reactor is carried out with an external oven.

The continuous-flow hydrothermal reactor may be preferably operated at an internal pressure in the range of from 12 to 17 MPa and an internal temperature in the range of from 125 to 175°C.

The mixed solution or suspension flows through the continuous-flow reactor for a certain amount of time (known as "residence time") under the abovementioned temperature and pressure conditions, so that formation of the amorphous LDH may occur. The residence time may be less than 15 seconds, equal to or less than 10 seconds, or equal to or less than 5 seconds.

The process for preparing amorphous hydrotalcite-like LDHs may further comprise cooling the outlet solution containing an amorphous hydrotalcite-like LDH precipitate. This step may be followed by an optional isolation step (e.g. a centrifugation step), and by subsequently washing the amorphous hydrotalcite-like LDH precipitate. In particular, the subsequent washing of the amorphous hydrotalcite-like LDH precipitate may be carried out one or more times with water, more preferably, with deionized water. Such washing steps may be necessary to remove excess salts. Subsequently, the process according to the first aspect of the invention may further comprise a drying step to provide dried amorphous hydrotalcite-like LDHs.

Accorded to a second aspect of the invention, an amorphous hydrotalcite-like layered double hydroxide which is obtained by the process as defined according the first aspect of the invention is provided.

Preferably, the amorphous hydrotalcite-like layered double hydroxide which is obtainable or obtained by the process as defined according the first aspect of the invention has the following general formula (I):

$$[M_n^{2+}M^{3+}(OH)_{2+2n}](A_{0.5}^{2-}) \cdot xH_2O \qquad (I)$$

wherein $M^{2+}$ denotes a divalent metal cation which is selected from the group consisting of $Mg^{2+}$, $Zn^{2+}$ and $Cu^{2+}$;

$M^{3+}$ denotes a trivalent metal cation which is selected from the group consisting of $Al^{3+}$, $Fe^{3+}$ and $Mn^{3+}$;

$A^{2-}$ denotes a divalent anion which is sulphate anion $(SO_4^{2-})$ or a mixture of sulphate anion $(SO_4^{2-})$ and carbonate anion $(CO_3^{2-})$.

n denotes an integer in the range of from 1 to 5; and

x denotes a value in the range of from 0 to 10.

Preferably, the divalent metal cation $M^{2+}$ is selected from the group consisting of $Mg^{2+}$ and $Zn^{2+}$. More preferably, the divalent metal cation $M^{2+}$ is $Mg^{2+}$.

In another preferred embodiment, the trivalent metal cation $M^{3+}$ is selected from the group consisting of $Al^{3+}$ and $Mn^{3+}$. More preferably, the trivalent metal cation $M^{3+}$ is $Al^{3+}$.

Preferably, $A^{2-}$ denotes a divalent anion which is a mixture of sulphate anion $(SO_4^{2-})$ and carbonate anion $(CO_3^{2-})$.

n denotes an integer which is preferably in the range of from 2 to 4, more preferably in the range of from 2 to 3, still preferably is 2.

X denotes a value preferably in the range of from 0 to 5, more preferably in the range of from 0 to 3, still more preferably in the range of from 0.5 to 2.5, and still even more preferably X denotes a value which is equal to 2.

According to a preferred embodiment, the amorphous hydrotalcite-like layered double hydroxide with formula (I) has $M^{2+}$ selected from the group consisting of $Mg^{2+}$ and $Zn^{2+}$; $M^{3+}$ selected from the group consisting of $Al^{3+}$ and $Mn^{3+}$; $A^{2-}$ is sulphate anion $(SO_4^{2-})$; n is an integer in the range of from 1 to 5; and x has a value in the range of from 0 to 3.

In another preferred embodiment, the amorphous hydrotalcite-like layered double hydroxide with formula (I) has $M^{2+}$ selected from the group consisting of $Mg^{2+}$ and $Zn^{2+}$; $M^{3+}$ selected from the group consisting of $Al^{3+}$ and $Mn^{3+}$; $A^{2-}$ is a mixture of sulphate anion $(SO_4^{2-})$ and carbonate anion $(CO_3^{2-})$; n is an integer in the range of from 1 to 5; and x has a value in the range of from 0 to 3.

More preferably, the amorphous hydrotalcite-like layered double hydroxide with formula (I) has $M^{2+}$ selected from the group consisting of $Mg^{2+}$ and $Zn^{2+}$; $M^{3+}$ selected from the group consisting of $Al^{3+}$ and $Mn^{3+}$; $A^{2-}$ is sulphate anion $(SO_4^{2-})$; n is an integer in the range of from 1 to 5; and x has a value in the range of from 0 to 3.

Still more preferably, the amorphous hydrotalcite-like layered double hydroxide with formula (I) has $M^{2+}$ selected from the group consisting of $Mg^{2+}$ and $Zn^{2+}$; $M^{3+}$ selected from the group consisting of $Al^{3+}$ and $Mn^{3+}$; $A^{2-}$ is a mixture of sulphate anion $(SO_4^{2-})$ and carbonate anion $(CO_3^{2-})$; n is an integer in the range of from 1 to 5; and x has a value in the range of from 0 to 3.

The amorphous hydrotalcite-like layered double hydroxides according to this second aspect of the invention advantageously have a particle size distribution D80 in the range of 10 to 150 nm, preferably in the range of 10 to 60 nm. More preferably, the amorphous hydrotalcite-like layered double hydroxides have a particle size distribution D60 in the range of 10 to 40 nm. Still more preferably, the amorphous hydrotalcite-like layered double hydroxides according to this second aspect of the invention have a particle size distribution D80 in the range of 10 to 150 nm and a particle size distribution D60 in the range of 10 to 40 nm, still even more preferably, a particle size distribution D80 in the range of 10 to 60 nm and a particle size distribution D60 in the range of 10 to 40 nm Herein the expression "D80" refers to 80% by number of the particles of the product having a specific diameter, and "D60" refers to 60% by number of the particles of the product having a specific diameter. Values of both D80 and D60 parameters have been calculated on the basis of TEM images obtained on a JEOL JEM-1230 thermionic transmission electron microscope (120 kV) with a digital camera.

A third aspect of the invention relates to the use of the amorphous hydrotalcite-like layered double hydroxides obtained by the process of the invention in the field of cement materials, particularly in alkali-activated cements.

In particular, according to one embodiment, it is provided the use of an amorphous hydrotalcite-like layered double hydroxide as accelerator in an alkali-activated cement hydration reaction.

Hydration is an essential step involved in the production of hardened alkali-activated cements. When water is added, a number of reactions occur inside the mineral mixture. As the reactions proceed, the products of the hydration process gradually bond together to eventually produce a hardened mass. It is possible to get an indication of the rate at which the minerals react by monitoring the rate at which heat is evolved, usually using a technique known as isothermal calorimetry.

It has been surprisingly found that when the amorphous hydrotalcite-like layered double hydroxides obtained according to the process of the invention were used in alkali-activated cement hydration reactions, hydration rate increased significantly. Furthermore, it has also been observed that the alkali-activated cement hardened much faster compared to other cases in which either no accelerators were used, or layered double hydroxides obtained by conventional precipitation methods were used.

Throughout the description and the claims, the word "comprise" and variations thereof are not intended to exclude other technical features, ingredients or steps. Additional advantages and features of the invention will become apparent to those skilled in the art upon examination of the description or may be learned by practice of the invention without undue burden.

## EXAMPLES

The following examples are provided by way of illustration and shall not be construed as limiting the invention.

### Example 1 - Exemplary synthesis of an amorphous hydrotalcite-like layered double hydroxide according to the co-flow process of the invention

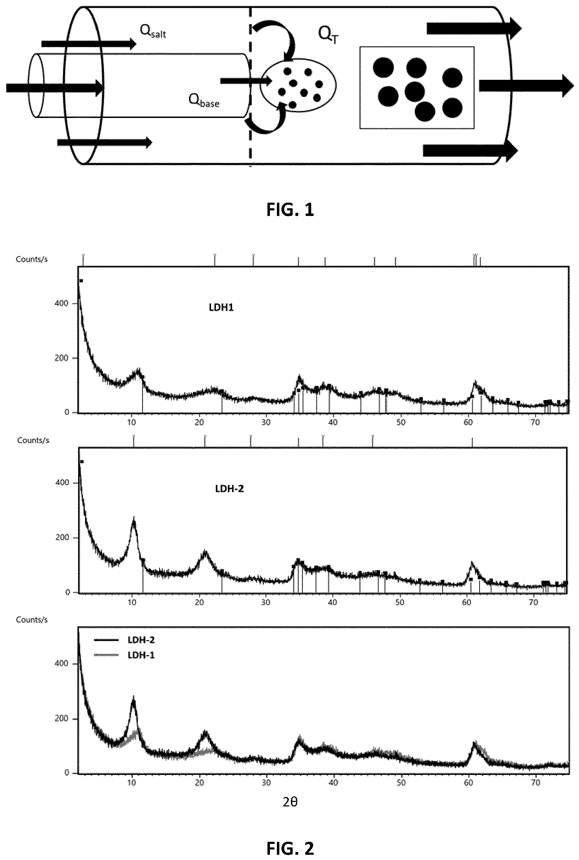

Synthesis of $[Mg_2Al(OH)_6(SO_4)_{0.5}\cdot2H_2O]$ amorphous hydrotalcite-like LDH: the synthesis was carried out in a continuous hydrothermal co-flow reactor (see **FIG. 1**). The residence time of the solution in the reactor was 5 s. A precursor solution containing $Mg(NO_3)_2\cdot6H_2O$ (0.022M) and $Al(NO_3)_3\cdot9H_2O$ (0.011M) was prepared by mixing the appropriate amounts of the components in a water medium. A base solution containing $Na_2SO_4$ (0.011M) and NaOH (0.033M) was also prepared by mixing the appropriate amounts of the components in a water medium. Both solutions were introduced into the reactor by two high pressure pumps. The reactor was inside an oven and the temperature of the solution inside of the reactor was 150°C. The pressure of the reactor was 15 MPa, which was produced by the back-pressure regulator set at the outlet of the system. The precursor solution was introduced at a flow rate ($Q_{salt}$) of 2.81 mL/min, and the base solution was introduced at a flow rate ($Q_{base}$) of 5.62 mL/min, that is, $Q_{base} = 2 \times Q_{salt}$, so the total flow ($Q_T$) entering the reactor then was $Q_T = Q_{base} + 2Q_{salt}$. The base solution was introduced through a tube with a diameter of 1/16", and the precursor solution was introduced through another tube with a wider diameter (d=1/8"). Both solutions were introduced in the reactor without any preheating. A white solid was obtained as a water dispersion at the outlet of the set-up. The dispersion was centrifuged and decanted, and the resulting solid was then washed with water several times to remove any salts and impurities. Lastly, the white solid was dried overnight in an oven at a temperature of 60-80°C.

The resulting amorphous hydrotalcite-like LDH (hereinafter referred to as LDH-1) was characterized by X-ray powder diffraction (XRPD), Fourier-transform infrared spectroscopy (FTIR) and high-resolution transmission electron microscopy (HRTEM).

For comparative purposes, another Mg-Al-SO$_4$ hydrotalcite-like LDH material was prepared according to the continuous hydrothermal flow method disclosed in Aymonier, Prevot et al. (Chem. Nano. Mat. 2017, 3(9), 614-619). The same divalent and trivalent metal cations, $Mg^{2+}$ and $Al^{3+}$, and also sulphate anions as charge-balancing metallic anions were used, and reactor conditions were 200°C and 20 MPa. In that case, the base solution was introduced at a flow rate ($Q_{base}$) which was also the double of the precursor solution rate ($Q_{salt}$), but in contrast with the process of the present invention, the base solution was then introduced through the tube with the wider diameter, whereas the precursor salt solution was introduced through a smaller diameter tube. The resulting hydrotalcite-like LDH, which turned out to be crystalline, as discussed below, is hereinafter referred to as LDH-2.

## X-RAY POWDER DIFFRACTION (XRPD)

XRPD analysis was carried out in a Philips X'Pert Pro MPD pw3040/60 diffractometer, equipped with a copper ceramic tube and employing a continuous scanning in the $2\theta$ range from 2 to 75$\underline{o}$ and a generator power of 40 kV and 40 mA.

LDH-1 XRPD spectrum showed peaks similar to the hydrotalcite $[Mg_6Al_2CO_3(OH)_{16}\cdot4H_2O]$ compound but at slightly different position of the peaks. The basal distance of the layered double hydroxide (LDH) is the distance between the two brucite-like layers (formed by the Mg-Al hydroxide structure) and depending on the size of the counterion it could be bigger or smaller than in hydrotalcite (where the counterion is carbonate ions).

A larger planar distance was found compared to hydrotalcite, which is in accordance with the fact that in this case the counterion used was sulphate ion ($SO_4^{2-}$, tetrahedral geometry) which is bigger than the carbonate ion ($CO_3^{2-}$, trigonal planar geometry) present in hydrotalcite. In particular, hydrotalcite, according to the indexed reference (code 01-070-2151) of the International Centre for Diffraction Data, has a basal distance ($d_{003}$) of 7.60 Å, or $2\theta$ signal at 10.7°, whereas the basal distance for the product ($Mg_2Al(OH)_6(SO_4)_{0.5}\cdot2H_2O$) prepared according to the process of the invention corresponds to a $2\theta$ signal at 11.15°.

XRPD peaks were not particularly intense, and were significantly wide, which are two aspects indicative of the amorphous nature of the LDH-1 product (**FIG. 2, upper image**).

On the contrary, XRPD peaks of the LDH-2 sample were more defined and presented higher intensity, thus confirming the crystalline nature of the product obtained by the method of Aymonier, Prevot *et al.* (**FIG. 2, central image**), in contrast with the amorphous product obtained by the method of the present invention. A comparative XRPD image, shown in **FIG. 2, lower image**, confirms the differences between both products in terms of crystallographic properties.

## FOURIER-TRANSFORM INFRARED SPECTROSCOPY (FTIR)

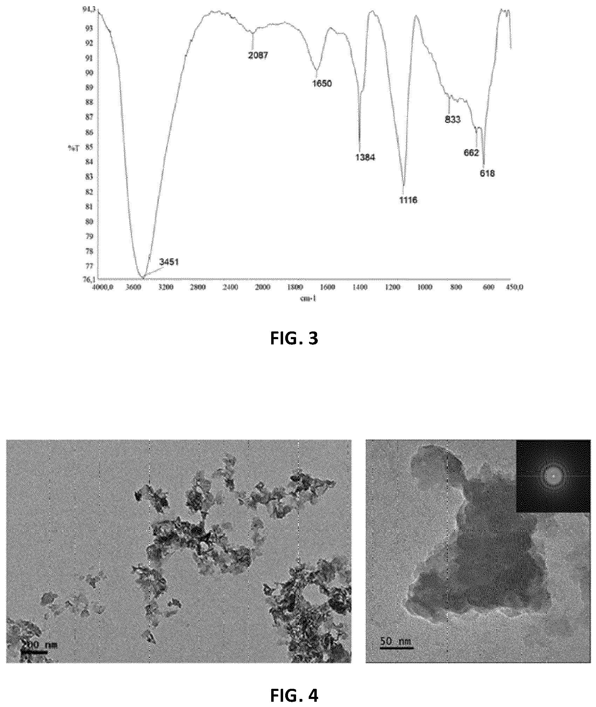

LDH-1 was also characterized by FT-IR (**FIG. 3**). IR spectra were recorded in a Spectrum 100 instrument (Perkin-Elmer), employing 8 scans with 4 cm$^{-1}$ resolution. Samples were prepared by mixing them with KBr and preparing a pellet.

FIG. 3 reveals characteristic bands of hydrotalcite-like compounds. The H-O stretching vibration of the hydroxide group bound to the magnesium ion was observed at 3451 cm$^{-1}$. The band at 1650 cm$^{-1}$ is due to the bending vibration mode of the $H_2O$ molecule. The band observed at 1116 cm$^{-1}$ is characteristic of the $v_3$ vibration band of the sulphate ion. The vibrational bands between 600 and 850 cm$^{-1}$ can be assigned to Al-OH bending vibrations according to Barka et al. (Desalination and Water Treatment Barka et al, DOI: 10.1080/19443994.2015.1124055). This IR spectrum confirms the presence of sulphate ions in the interlayer of the amorphous hydrotalcite-like LDH prepared according to the process of the invention (LDH-1), and evidences the presence of a certain amount of carbonate ion in the structure based on the observation of an absorption band at around 1384 cm$^{-1}$.

## HIGH-RESOLUTION TRANSMISSION ELECTRON MICROSCOPY (HRTEM)

FIG. 4 presents two HRTEM images of the exemplary amorphous hydrotalcite-like layered double hydroxide LDH-1. HRTEM analysis was carried out in a JEM-2200 FS/CR (JEOL, Ltd.) field emission gun (FEG) transmission electron microscope operated at 200 kV. Samples were dispersed in methanol and a drop of the dispersion was applied to a carbon grid. The electron diffraction analysis shown in the inset shown in Fig. 4, right image, shows no diffraction patterns, thus confirming the amorphous nature of the material.

HRTEM images of the LDH-1 sample evidenced the small dimension (i.e. particles with a mean diameter size of about 30 nm) of the particles of the product.

### Comparative example - Synthesis of a hydrotalcite-like layered double hydroxide according to conventional co-precipitation method

Synthesis of Mg-Al-SO$_4$ layered double hydroxide by the traditional coprecipitation reaction (Ref. LDH-3): This synthesis was based on the one described in the reference J. Therm. Anal. Calorim. 2012, 110:641-646. The synthesis was carried out as follows: 100 mL solution of $Na_2SO_4$ (0.00975 mol) and NaOH (0.0585 mol) were prepared and placed in a round bottom flask. A 100-mL solution containing both $Mg(NO_3)_2\cdot6H_2O$ (0.0195 mol) and $Al(NO_3)_3\cdot9H_2O$ (0.00975 mol) was also prepared and then added dropwise to the base solution at room temperature. The reaction was left stirring for 4 hours. During that time, a white solid was formed in the reaction. After the 4 hours the reaction was filtered and the solid was washed several times with distilled and decarbonated water. The solid was then dried in the oven at 100°C, and once dried, it was characterized by XRPD, FT-IR and HRTEM. This Mg-Al-SO$_4$ LDH is hereinafter referred to as LDH-3.

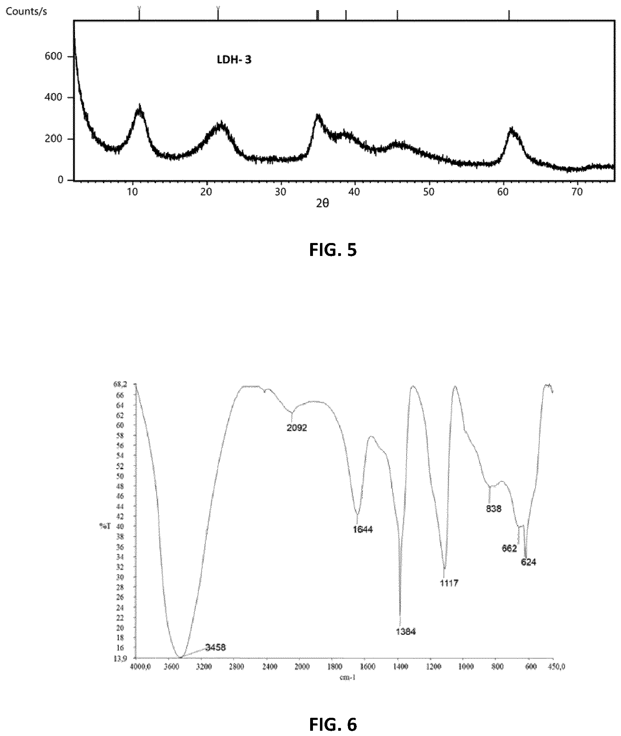

The XRPD diffractogram (**FIG. 5**) indicated that the compound contained sulphate ions as in the case of LDH-1, showing a 2θ signal at 10.84° instead of the characteristic hydrotalcite signal at 10.7°.

The FT-IR spectrum (**FIG. 6**) of LDH-3 compound showed absorption bands which were very similar to those of a hydrotalcite compound. There was a band at 3458 $cm^{-1}$ due to the stretching band of the hydroxide group bound to the Mg), another band at 1644 $cm^{-1}$ due to the bending mode of the water molecule, and a band at 1117 $cm^{-1}$ which could be assigned to the vibration mode of the sulphate ion. There was also a band at 1384 $cm^{-1}$ which indicated that carbonate ions were also present in the compound.

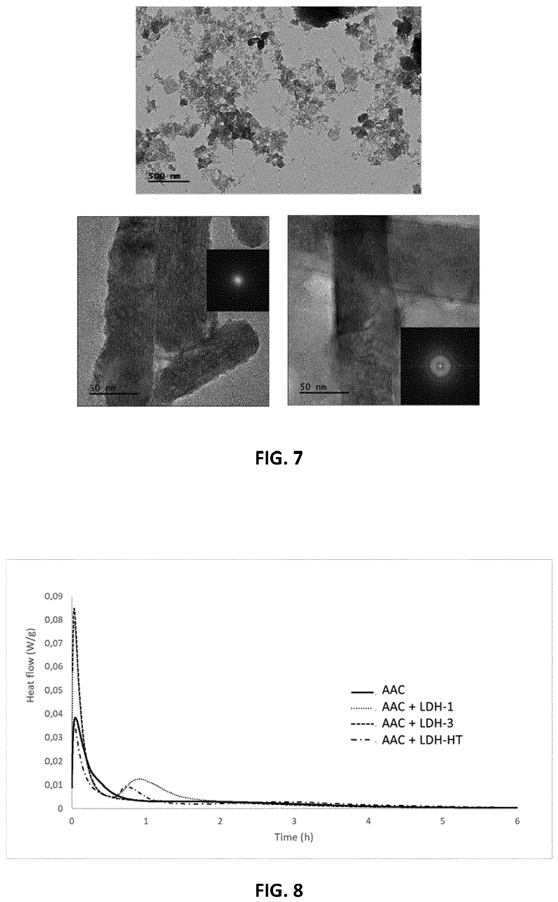

Characterization of the compound by HRTEM (**FIG. 7**) showed that the material was formed by small particles with a certain degree of crystallinity (as shown by the selected area electron diffraction pattern of the material included in the insert of **FIG. 7, right image**), higher than the one observed in LDH-1 HRTEM images.

**Example 2** - **Acceleration of reaction kinetics of alkali-activated cements by the use of amorphous Mg-Al-SO$_4$ layered double hydroxides synthesized using the process according to the invention**

The effect of the addition of LDH-1 (i.e. exemplary amorphous Mg-Al-SO$_4$ LDH prepared as disclosed in Ex. 1) to an alkaline activated cement was followed by isothermal calorimetry. For this purpose, a TAM-air calorimeter from TA instruments was used, and experiments were conducted at room temperature, with runs between 1 and 3 days.

In isothermal calorimetry, the hydration reaction is monitored through the heat release occurring in the mixture over time. An acceleration of the heat release indicates that a chemical reaction is happening. In general, in the case of cements, when water is added to the system and the cement starts dissolving, a large heat release peak is observed. This release reaches a peak and then starts slowing down over time. Then there is a period where there is almost no increase in the heat release (the heat is released in constant way) and at a point in time, another increase in the heat release is observed which is due to the formation/production of hardened cement. Furthermore, the total heat released of the system indicates the quantity of hardened cement produced over time.

The effect of the addition of LDH-1 product in the hydration of the alkali activated cement (AAC) was compared via isothermal calorimetry with the alkali activated cement alone, and also with two more mixtures: one mixture of AAC with a Mg-Al-SO$_4$ synthesized by the traditional coprecipitation route (i.e. LDH-3 prepared as Comparative example), and another mixture of AAC with a commercial synthetic hydrotalcite (crystalline Mg-Al-CO$_3$ LDH, hereinafter referred to as LDH-HT; purchased to Aldrich: magnesium aluminum hydroxycarbonate, CAS Nr. 11097-59-9).

ACC mixtures used in the isothermal calorimetry study had the following composition:

- Alkali Activated Cement (AAC) alone mixture:

| | |
|---|---|
| Fly Ash: | 4.5g (75% by weight of binder) |
| Calcined lime (CaO): | 0.3 g (5% by weight of binder) |
| Na$_2$SO$_4$: | 0.72 g (12% by weight of binder) |
| Sodium silicate solution: | 0.48 g (8% by weight of binder) |
| Distilled water: | 1.62 g (w/b=0.27) |

- AAC+EM-LDH1 (amorphous hydrotalcite-like LDH of the invention):

| | |
|---|---|
| Fly Ash: | 4.5g (75% by weight of binder) |
| Calcined lime (CaO): | 0.3 g (5% by weight of binder) |
| Na$_2$SO$_4$: | 0.72 g (12% by weight of binder) |
| Sodium silicate solution: | 0.48 g (8% by weight of binder) |
| LDH-1: | 0.3 g (5% by weight of binder) |
| Distilled water: | 1.62 g (w/b=0.27) |

- AAC+LDH-3 (co-precipitated LDH):

| | |
|---|---|
| Fly Ash: | 4.5g (75% by weight of binder) |
| Calcined lime (CaO): | 0.3 g (5% by weight of binder) |
| Na$_2$SO$_4$: | 0.72 g (12% in weight by of binder) |
| Sodium silicate solution: | 0.48 g (8% by weight of binder) |
| LDH-3: | 0.3 g (5% by weight of binder) |
| Distilled water: | 1.62 g (w/b=0.27) |

- AAC+commercial hydrotalcite (Mg$_6$Al$_2$CO$_3$(OH)$_{16}$·4H$_2$O, LDH-HT):

| | |
|---|---|
| Fly Ash: | 4.5g (75% in weight of binder) |
| Calcined lime (CaO): | 0.3 g (5% by weight of binder) |
| Na$_2$SO$_4$: | 0.72 g (12% by weight of binder) |
| Sodium silicate solution: | 0.48 g (8% by weight of binder) |
| LDH-HT: | 0.3 g (5% by weight of binder) |
| Distilled water: | 1.62 g (w/b=0.27) |

In all four cases, the expression "w/b" refers to water-to-binder ratio, wherein the binder amount is to be calculated as the sum of the amounts of fly ash, calcined lime (CaO) and Na$_2$SO$_4$.

These mixtures were prepared in the following way:

a) fly ash and calcined lime were mixed in solid state; when an LDH was employed, it was subsequently added to the mixture of fly ash and calcined lime and mixed in solid state;

b) Na$_2$SO$_4$ was dissolved in warm water and, once dissolved, waterglass was added and mixed; and

c) water with Na$_2$SO$_4$ and waterglass was added to the fly-ash and lime mixture (the fly-ash and lime mixture also containing LDH, when an LDH was employed), and the resulting mixture was homogeneously mixed and then introduced in the calorimeter.

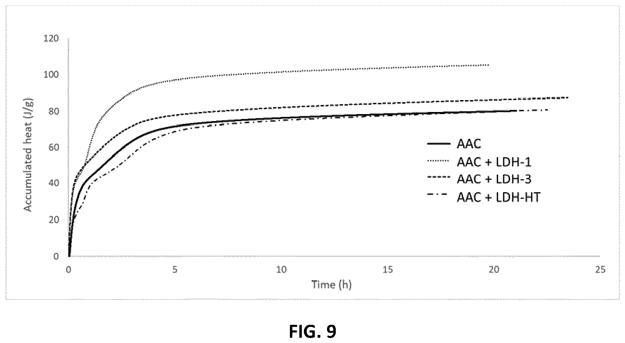

**FIG. 8** and **FIG. 9** show heat flow and accumulated heat, respectively, of the hydration of AAC with 5% by weight of the different LDHs, that is, LDH-1 (amorphous Mg-Al-SO$_4$ hydrotalcite-like LDH obtained according to the process of the invention), LDH-3 (Mg-Al-SO$_4$ synthesized by co-precipitation method) and LDH-HT (commercial hydrotalcite).

According to isothermal calorimetry curves obtained, it can be concluded that LDH-1 accelerates AAC hydration, which usually (with AAC alone) proceeds so slowly that either a peak is not observed in the curve, or it is observed much later. Therefore, AAC hardens much faster than with the other LDHs. The presence of a second peak in the "AAC + LDH-1" curve indicates that AAC with LDH-1 can be expected to have higher mechanical properties at earlier time, compared to the mixtures with the other LDHs.

On the other hand, it can be concluded that the addition of LDH-3 (co-precipitated Mg-Al-SO$_4$ LDH) does not have a significant effect in the hydration, since no intense peak can be observed. When commercial hydrotalcite (i.e. LDH-HT) was used, an acceleration of the hydration was observed, but much later than in the case of LDH-1. Besides, the peak observed with LDH-HT has lower intensity than the one corresponding to LDH-1 as accelerator, which indicates that less hardened material has been formed in the same amount of time.

The advantageous effect of LDH-1 as acceleration in hydration reactions of AAC can also be observed in the curve in **FIG. 9** (total heat released vs time).

**Claims**

1. A process for preparing an amorphous hydrotalcite-like layered double hydroxide, the process comprising:

contacting a first liquid stream with a second liquid stream to form a mixed solution or suspension in a first tubular component which is in fluid communication with a continuous-flow hydrothermal reactor; and
flowing the mixed solution or suspension through the continuous-flow hydrothermal reactor to form amorphous hydrotalcite-like layered double hydroxide compounds;
wherein
the first liquid stream is a precursor solution or suspension comprising a divalent metal cation source and a trivalent metal cation source, and the second liquid stream is a base solution or suspension comprising a hydroxide source and a charge-balancing divalent anionic source;
the first liquid stream flows through the first tubular component at a flow rate Q$_{salt}$, and the second liquid stream flows through a second tubular component at a flow rate Q$_{base}$ which is at least twice the flow rate Q$_{salt}$, wherein the tubular outlet of the second tubular component is in fluid communication with the first tubular component;
the first tubular component has an internal diameter d$_1$ and the second tubular component has an internal diameter d$_2$ which is smaller than d$_1$;

the second tubular component extends within and along at least a portion of the first tubular component, and the first tubular component and the second tubular component are configured so that the tubular outlet of the second tubular component is in fluid communication with the first tubular component at the inlet of the continuous-flow hydrothermal reactor;

and

the continuous-flow hydrothermal reactor is operated at an internal pressure in the range of from 10 to 20 MPa and an internal temperature in the range of from 125 to 200°C.

2. The process according to claim 1, wherein the continuous-flow hydrothermal reactor is operated at an internal pressure in the range of from 12 to 17 MPa and an internal temperature in the range of from 125 to 175°C.

3. The process according to claim 1 or 2, wherein the mixed solution has a pH value in the range of from 12 to 14.

4. The process according to any one of claims 1-3, wherein the divalent metal cation is selected from the group consisting of $Mg^{2+}$, $Zn^{2+}$, $Cu^{2+}$ and any mixture thereof, and/or wherein the trivalent metal cation is selected from the group consisting of $Al^{3+}$, $Fe^{3+}$, $Mn^{3+}$ and any mixture thereof.

5. The process according to any one of claims 1-4, wherein the divalent metal cation is $Mg^{2+}$ and the trivalent metal cation is $Al^{3+}$.

6. The process according to any one of claims 1-5, wherein the molar ratio divalent metal cation/charge-balancing divalent anion in the mixed solution or suspension is in the range of 1.0 to 2.0.

7. The process according to any one of claims 1-6, wherein the charge-balancing divalent anion comprises sulphate anion $(SO_4^{2-})$.

8. The process according to claim 7, wherein the charge-balancing divalent anion further comprises carbonate anion $(CO_3^{2-})$.

9. The process according to any one of claims 1-8, wherein the precursor solution or suspension and/or the base solution or suspension comprise(s) water and/or a solvent miscible with water.

10. The process according to any one of claims 1-9, wherein the amorphous hydrotalcite-like layered double hydroxide has a molar ratio divalent metal cation/trivalent metal cation in the precursor solution or suspension in the range of 5.0 to 1.0.

11. An amorphous hydrotalcite-like layered double hydroxide having the following general formula (I):

$$[M_n^{2+}M^{3+}(OH)_{2+2n}](A_{0.5}^{2-}) \cdot xH_2O \qquad (I)$$

wherein $M^{2+}$ denotes a divalent metal cation which is selected from the group consisting of $Mg^{2+}$, $Zn^{2+}$ and $Cu^{2+}$; $M^{3+}$ denotes a trivalent metal cation which is selected from the group consisting of $Al^{3+}$, $Fe^{3+}$ and $Mn^{3+}$;

$A^{2-}$ denotes a divalent anion which is sulphate anion $(SO_4^{2-})$ or a mixture of sulphate anion $(SO_4^{2-})$ and carbonate anion $(CO_3^{2-})$.

n denotes an integer in the range of from 1 to 5; and

x denotes a value in the range of from 0 to 10;

which is obtained by the process as defined according to any one of claims 1-12.

12. The amorphous hydrotalcite-like layered double hydroxide according to claim 11, wherein $A^{2-}$ denotes a mixture of sulphate anion $(SO_4^{2-})$ and carbonate anion $(CO_3^{2-})$.

**13.** The amorphous hydrotalcite-like layered double hydroxide according to claim 11 or 12, wherein $M^{2+}$ is $Mg^{2+}$ and/or wherein $M^{3+}$ is $Al^{3+}$.

**14.** The amorphous hydrotalcite-like layered double hydroxide according to any one of claims 11-13, wherein n is 2, and x has a value in the range of 0 to 3.

**15.** The amorphous hydrotalcite-like layered double hydroxide according to any one of claims 11-14, which has a particle size distribution D80 in the range of 10 to 150 nm and/or a particle size distribution D60 in the range of 10 to 40 nm.

**16.** Use of a hydrotalcite-like layered double hydroxide according to any one of claims 11-15 as accelerator in an alkali-activated cement hydration reaction.

**FIG. 1**

**FIG. 2**

FIG. 3

FIG. 4

**FIG. 5**

**FIG. 6**

**FIG. 7**

**FIG. 8**

**FIG. 9**

Europäisches
Patentamt

European
Patent Office

Office européen
des brevets

**EUROPEAN SEARCH REPORT**

Application Number

EP 19 38 3171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | QIANG WANG ET AL: "Synthesis of ultrafine layered double hydroxide (LDHs) nanoplates using a continuous-flow hydrothermal reactor", NANOSCALE, vol. 5, no. 1, 30 October 2012 (2012-10-30), pages 114-117, XP055702357, United Kingdom ISSN: 2040-3364, DOI: 10.1039/C2NR32568C * the whole document * & Qiang Wang ET AL: "Electronic Supporting information Synthesis of ultrafine layered double hydroxides (LDHs) nanoparticles using a continuous-flow hydrothermal reactor Dermot O'Hare Contents", , 13 October 2012 (2012-10-13), XP055702396, Retrieved from the Internet: URL:http://www.rsc.org/suppdata/nr/c2/c2nr32568c/c2nr32568c.pdf [retrieved on 2020-06-08] ----- | 1-16 | INV. C01F7/00 C01F5/24 |
| A | DIDIER TICHIT ET AL: "Synthesis of layered double hydroxides through continuous flow processes: A review", CHEMICAL ENGINEERING JOURNAL, vol. 369, 8 March 2019 (2019-03-08), pages 302-332, XP055702451, AMSTERDAM, NL ISSN: 1385-8947, DOI: 10.1016/j.cej.2019.03.057 * page 311, paragraph 2.3 - page 313 * ----- | 1-16 | TECHNICAL FIELDS SEARCHED (IPC)<br><br>C01F |

-/--

The present search report has been drawn up for all claims

| Place of search | Date of completion of the search | Examiner |
|---|---|---|
| Munich | 10 June 2020 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 19 38 3171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | I. CLARK ET AL: "Continuous synthesis of Zn 2 Al-CO 3 layered double hydroxides: a comparison of bench, pilot and industrial scale syntheses", REACTION CHEMISTRY & ENGINEERING, vol. 4, no. 4, 8 March 2019 (2019-03-08), pages 663-666, XP055702657, ISSN: 2058-9883, DOI: 10.1039/C8RE00241J * the whole document * | 1-16 | |
| A | PETER W. DUNNE ET AL: "Continuous-flow hydrothermal synthesis for the production of inorganic nanomaterials", ROYAL SOCIETY OF LONDON. PHILOSOPHICAL TRANSACTIONS.MATHEMATICAL, PHYSICAL AND ENGINEERING SCIENCES, vol. 373, no. 2057, 28 December 2015 (2015-12-28), page 20150015, XP055702948, GB ISSN: 1364-503X, DOI: 10.1098/rsta.2015.0015 * the whole document * | 1-16 | |

TECHNICAL FIELDS
SEARCHED      (IPC)

The present search report has been drawn up for all claims

| Place of search | Date of completion of the search | Examiner |
|---|---|---|
| Munich | 10 June 2020 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEL ARCO et al.** *J. Pharm. Sci.,* 2004, vol. 93 (6), 1649-1658
- **PING et al.** *Int. J. Pharm.,* 2011, vol. 404, 250-256
- **LU et al.** *J. Phys. Chem. B,* 2006, vol. 110, 16923-16929
- **O'HARE et al.** *Nanoscale,* 2013, 114-117
- **AYMONIER, PREVOT et al.** *Chem. Nano. Mat.,* 2017, vol. 3 (9), 614-619
- **YOON et al.** *Materials Chemistry and Physics,* 2014, vol. 145, 376-386
- **DUAN et al.** *Construction and Building Materials,* 2013, vol. 48, 601-609
- **AYMONIER ; PREVOT et al.** *Chem. Nano. Mat.,* 2017, vol. 3 (9), 614-619
- **BARKA et al.** *Desalination and Water Treatment*
- *J. Therm. Anal. Calorim.,* 2012, vol. 110, 641-646
- *CHEMICAL ABSTRACTS,* 11097-59-9